# EUROPEAN PATENT APPLICATION

(11) **EP 4 703 817 A1**
(43) Date of publication of application: **04.03.2026**
(21) Application number: 23934812.1
(22) Date of filing: 09.08.2023
(51) Int. Cl.: G05B 19/042

(54) **CONTROL METHOD, AUTONOMOUS OPERATION DEVICE, STOP STATION AND AUTONOMOUS OPERATION SYSTEM**

(30) Priority: 28.04.2023 CN 202310499255
(71) Applicant: Zhejiang Sunseeker Industrial Co., Ltd., Jinhua, Zhejiang 321042 (CN)
(72) Inventor: WANG, Qidong, Jinhua, Zhejiang 321042 (CN); HU, Xiuchuan, Jinhua, Zhejiang 321042 (CN); YAO, Yongzhe, Jinhua, Zhejiang 321042 (CN)
(74) Representative: Manna, Sara
(86) International application number: PCT/CN2023/111962
(87) International publication number: WO 2024/221640

(57) **Abstract**

Embodiments of the present disclosure relate to the technical field of autonomous operation control, and provide a control method, an autonomous operation device, a docking station, and an autonomous operation system. The control method includes: transmitting a first signal to a docking station based on a first preset period when an autonomous operation device is in a first state, to enable the docking station to control, if the first signal is received, power terminals of the docking station for charging the autonomous operation device to be de-energized; stopping transmitting the first signal to the docking station when the autonomous operation device is in a second state, to enable the docking station to control, if the first signal is not received within preset duration, the power terminals to be energized; and charging a battery in the autonomous operation device after the autonomous operation device in the second state is docked with the power terminals of the docking station. In the present disclosure, when the autonomous operation device is in the first state, the power terminals of the docking station are de-energized. In this case, even if the power terminals are short-circuited or one accidentally touches the power terminals, there is no risk of short circuits or electric shocks, thereby improving safety.

## Description

### TECHNICAL FIELD

The present disclosure relates to the technical field of autonomous operation control, and in particular, to a control method, an autonomous operation device, a docking station, and an autonomous operation system.

### BACKGROUND

A variety of robots are commercially available today, such as robotic mowers, robotic sweepers, mopping robots, and the like. For a robot, a charging station matching the robot is set up at a fixed position for charging the robot. When the robot is low on power and needs to be charged, the robot returns to the charging station for charging.

However, for an existing charging station, a power electrode that stays energized leads to a waste of electric energy and potential safety hazards. Based on the aforementioned technical problems, the applicant proposes the technical solutions of the present disclosure.

### SUMMARY

The objective of the present disclosure is to provide a control method, an autonomous operation device, a docking station, and an autonomous operation system. When the autonomous operation device is in a first state, power terminals of the docking station are de-energized. In this case, even if the power terminals are short-circuited or one accidentally touches the power terminals, there is no risk of short circuits or electric shocks, thereby improving safety. In addition, this reduces the duration for which the power terminals stay energized, thereby delaying corrosion caused by the power terminals being energized, extending the service life of the power terminals, and reducing waste of electric energy.

To achieve the objective, the present disclosure provides a control method applied to an autonomous operation device. The method includes: transmitting a first signal to a docking station based on a first preset period when the autonomous operation device is in a first state, to enable the docking station to control, if the first signal is received, power terminals of the docking station for charging the autonomous operation device to be de-energized; stopping transmitting the first signal to the docking station when the autonomous operation device is in a second state, to enable the docking station to control, if the first signal is not received within preset duration, the power terminals to be energized, where the preset duration is greater than a period length of the first preset period; and charging a battery in the autonomous operation device after the autonomous operation device in the second state is docked with the power terminals of the docking station.

The present disclosure further provides a non-transitory computer-readable storage medium having stored thereon processor-executable instructions, where the executable instructions are configured to enable a processor of an autonomous operation device to perform the control method described above.

The present disclosure further provides an autonomous operation device, configured to perform the control method for the autonomous operation device described above, or including the non-transitory computer-readable storage medium described above. The present disclosure further provides a control method applied to a docking station. The method includes: controlling power terminals of the docking station for charging an autonomous operation device to be de-energized in response to a first signal transmitted by the autonomous operation device based on a first preset period when the autonomous operation device is in a first state; controlling the power terminals to be energized if the first signal is not received within preset duration, where the preset duration is greater than a period length of the first preset period; and charging a battery in the autonomous operation device after the docking station is docked with the power terminals of the autonomous operation device.

The present disclosure further provides a non-transitory computer-readable storage medium having stored thereon processor-executable instructions, where the executable instructions are configured to enable a processor of an autonomous operation device to perform the control method described above.

The present disclosure further provides a docking station, configured to perform the control method for the autonomous operation device described above, or including the non-transitory computer-readable storage medium described above.

The present disclosure further provides an autonomous operation system, including the autonomous operation device and docking station described above, where the docking station is communicatively connected to the autonomous operation device.

In an embodiment, before stopping transmitting the first signal to the docking station when the autonomous operation device is in the second state, the method further includes: detecting whether the autonomous operation device has entered a preset range; and performing the step of stopping transmitting the first signal to the docking station if it is detected that the autonomous operation device has entered the preset range; or returning to the step of detecting whether the autonomous operation device has entered the preset range if it is not detected that the autonomous operation device has entered the preset range.

In an embodiment, detecting whether the autonomous operation device has entered the preset range includes: determining a distance between the autonomous operation device and the docking station based on position information acquired by a positioning device in the autonomous operation device; and determining that the autonomous operation device has entered the preset range if the distance between the autonomous operation device and the docking station is less than or equal to a preset distance threshold; or determining that the autonomous operation device has not entered the preset range if the distance between the autonomous operation device and the docking station is greater than a preset distance threshold.

In an embodiment, detecting whether the autonomous operation device has entered the preset range includes: determining whether the autonomous operation device has received a guide signal transmitted by a guide apparatus in the docking station; and determining that the autonomous operation device has entered the preset range if the autonomous operation device has received the guide signal transmitted by the guide apparatus in the docking station; or determining that the autonomous operation device has not entered the preset range if the autonomous operation device has not received the guide signal transmitted by the guide apparatus in the docking station.

In an embodiment, the transmission of the first signal to the docking station is stopped when the autonomous operation device switches to the second state.

In an embodiment, the method further includes: transmitting a second signal to the docking station based on a second preset period when the autonomous operation device is in the first state, to enable the docking station to determine, if the docking station has not received the second signal, that a distance between the autonomous operation device and the docking station is greater than a set safe distance.

In an embodiment, the autonomous operation device further includes an anti-theft module, and the method further includes: when the autonomous operation device is in the first state, stopping transmitting the second signal to the docking station if the anti-theft module detects that the autonomous operation device leaves a preset working region.

In an embodiment, if a second signal transmitted by the autonomous operation device based on a second preset period when the autonomous operation device is in the first state is not received, it is determined that a distance between the autonomous operation device and the docking station is greater than a set safe distance.

In an embodiment, the method further includes: if a second signal transmitted by the autonomous operation device based on a second preset period when the autonomous operation device is in the first state is not received, keeping the power terminals de-energized.

In an embodiment, the method further includes: if a second signal transmitted by the autonomous operation device based on a second preset period when the autonomous operation device is in the first state is not received, transmitting an alarm signal to notify a user that the autonomous operation device leaves a preset working region.

In an embodiment, the power terminals are controlled to stay energized when the docking station and the autonomous operation device are in a docked state.

In an embodiment, the method further includes: controlling the power terminals to be energized in response to a received trigger signal for controlling the power terminals to be energized.

### BRIEF DESCRIPTION OF THE DRAWINGS

FIG. 1 is a schematic diagram of an autonomous operation device to which a control method according to a first embodiment of the present disclosure is applied and a docking station to be paired with the autonomous operation device;
FIG. 2 is a specific flowchart of a control method according to a first embodiment of the present disclosure;
FIG. 3 is a specific flowchart of a control method according to a second embodiment of the present disclosure;
FIG. 4 is a specific flowchart of a control method according to a third embodiment of the present disclosure;
FIG. 5 is a schematic diagram of an autonomous operation device to which a control method according to a third embodiment of the present disclosure is applied;
FIG. 6 is a specific flowchart of a control method according to a fourth embodiment of the present disclosure; and
FIG. 7 is a specific flowchart of a control method according to a fifth embodiment of the present disclosure.

### DETAILED DESCRIPTION

Embodiments of the present disclosure will be described in detail below with reference to the accompanying drawings, such that the objectives, features, and advantages of the present disclosure can be understood more clearly. It should be understood that the embodiments shown in the accompanying drawings are not intended to limit the scope of the present disclosure, but are merely intended to illustrate the essential spirit of the technical solution of the present disclosure.

In the following description, for the purposes of explanation, some specific details are set forth in order to provide a thorough understanding of the various disclosed embodiments. However, those skilled in the related art will recognize that an embodiment can be practiced without one or more of the specific details. In other instances, well-known apparatuses, structures, and techniques associated with the present disclosure may not be shown or described in detail to avoid unnecessarily obscuring the description of the embodiments.

Unless the context requires otherwise, throughout the specification and claims, the words "comprise", "include", and variations thereof, such as "comprises", "comprising", "includes", and "including", should be understood as having an open and inclusive meaning, that is, should be interpreted as "includes, but is not limited to".

Throughout this specification, reference to "one embodiment" or "an embodiment" means that a particular feature, structure, or characteristic described with reference to an embodiment is included in at least one embodiment. Thus, appearances of the phrase "in one embodiment" or "in an embodiment" at various positions throughout this specification do not necessarily all refer to the same embodiment. In addition, particular features, structures, or characteristics may be combined in any manner in one or more embodiments.

As used in this specification and the appended claims, the singular forms "a/an" and "the" include plural references, unless otherwise specified clearly in the context. It should be noted that the term "or" is generally used as a meaning of "or/and", unless otherwise specified clearly in the context.

For the purpose of clearly illustrating a structure and an operation mode of the present disclosure, various directional terms are used in the following description, but the terms "front", "rear", "left", "right", "outer", "inner", "outward", "inward", "upper", "lower", and the like should be interpreted as convenient expressions and should not be interpreted as limiting terms.

A first embodiment of the present disclosure relates to a control method applied to an autonomous operation device. The autonomous operation device refers to a robot that can autonomously move within a preset working region enclosed by boundaries and perform a specific operation, typically an intelligent sweeper/vacuum cleaner performing a cleaning operation, or an intelligent lawn mower performing a lawn mowing operation.

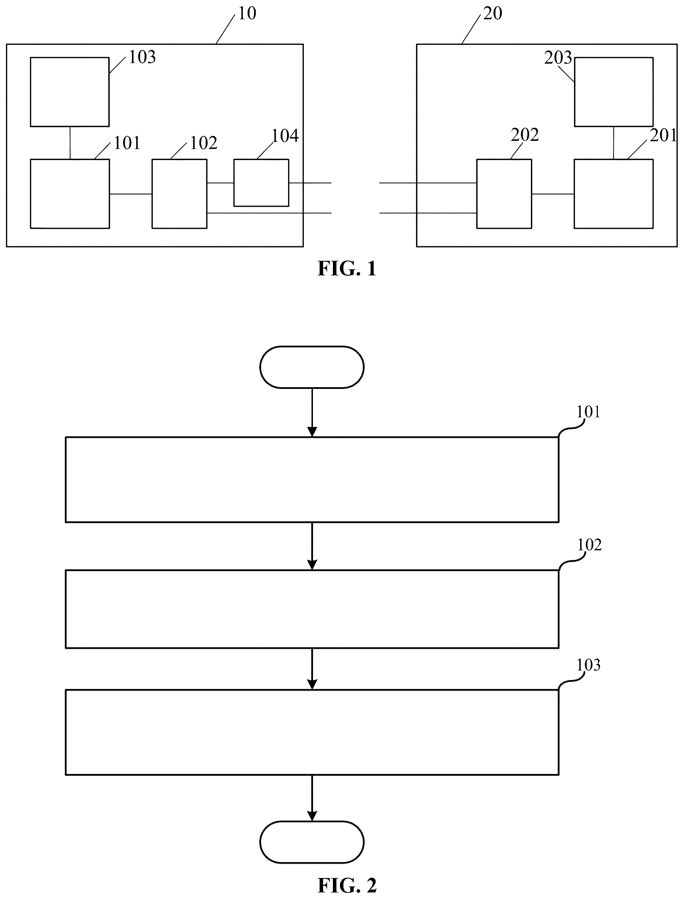

The autonomous operation device may move to a docking station to be paired with the autonomous operation device for charging, and the autonomous operation device is communicatively connected to the docking station via wireless communication. As shown in FIG. 1, a docking station 10 is provided with a first control unit 101 (for example, an MCU), a charging module 102 and a first communication module 103 that are communicatively connected to the first control unit 101 separately, and a switch unit 104. The charging module 102 in the docking station 10 includes two power terminals, and the switch unit 104 is connected between one of the power terminals and the charging module 102. An autonomous operation device 20 is provided with a second control unit 201 (for example, an MCU), and a battery pack 202 and a second communication module 203 that are communicatively connected to the second control unit 201 separately. The battery pack 202 in the autonomous operation device 20 includes two charging terminals.

The first communication module 103 is communicatively connected to the second communication module 203 via wireless communication, such that the first control unit 101 is communicatively connected to the second control unit 201 via wireless communication; that is, the autonomous operation device 20 is communicatively connected to the docking station 10 via wireless communication. The docking station 10 is connected to an external power supply. When the two charging terminals of the autonomous operation device 20 are electrically connected to the two power terminals of the docking station 10, respectively, the first control unit 101 in the docking station 10 can control the switch unit 104 to be closed, to charge the battery pack 202 in the autonomous operation device 20.

It should be noted that only necessary modules or mechanical structures of the autonomous operation device and the docking station for implementing the control method described above are provided in this embodiment and the following embodiments, and the autonomous operation device and the docking station each further include other regular modules and mechanical structures, which will not be described in detail herein.

A specific process of the control method according to this embodiment is shown in FIG. 2.

In step 101, a first signal is transmitted to a docking station based on a first preset period when an autonomous operation device is in a first state, to enable the docking station to control, if the first signal is received, power terminals of the docking station for charging the autonomous operation device to be de-energized.

Specifically, the autonomous operation device may perform an operation in a preset working region based on a configured operation task, and the autonomous operation device is communicatively connected to the docking station via wireless communication. When performing the operation task, the autonomous operation device is in the first state, and the autonomous operation device periodically transmits the first signal to the docking station based on the first preset period during the operation. When the docking station receives the first signal, if a switch unit connected to the power terminals is in an on state, the docking station controls the switch unit to switch to an off state; or if a switch unit connected to the power terminals is in an off state, the docking station controls the switch unit to stay in the off state. In this way, the power terminals of the docking station can be de-energized.

In some embodiments, the first preset period may be a constant value. In some embodiments, a first time interval between two adjacent first signals is a value that changes within a specific numerical value range, and the first preset period is defined as a maximum value of the first time interval. In some embodiments, the first time interval changes in a regular manner. In some embodiments, the first time interval changes randomly or pseudo-randomly.

In step 102, the transmission of the first signal to the docking station is stopped when the autonomous operation device is in a second state, to enable the docking station to control, if the first signal is not received within preset duration, the power terminals to be energized, where the preset duration is greater than a period length of the first preset period.

Specifically, in a process in which the autonomous operation device is in the first state, if it is detected that a set condition is triggered, the first state is switched to the second state, and the autonomous operation device stops transmitting the first signal to the docking station. In an example, the set condition is that in a process in which the autonomous operation device works in the first state, if remaining working time before the end of the work satisfies a specific condition (for example, the remaining working time is less than or equal to one minute), the autonomous operation device switches from the first state to the second state. In this case, the autonomous operation device is in the second state, stops transmitting the first signal to the docking station, continues to work, and enters a return state after finishing the work task.

In another example, the second state may be the return state, and in this case, the set condition is that the autonomous operation device has finished the work task, is low on power, or has reached set working time. In this case, the autonomous operation device switches from the first state to the return state and moves toward the docking station, while stopping transmitting the first signal to the docking station. For example, when entering the return state, the autonomous operation device immediately stops transmitting the first signal to the docking station; or after entering the return state, the autonomous operation device starts a timer for set duration, and stops transmitting the first signal to the docking station when the timer reaches the set duration; or when entering the return state, the autonomous operation device records a travelling distance since the activation of the return state, and stops transmitting the first signal to the docking station when the travelling distance reaches a set distance. When entering the return state, the autonomous operation device that returns along a boundary moves to a nearest boundary line, and returns to the docking station along the boundary line; or when entering the return state, the autonomous operation device that does not return along a boundary line starts to plan a return path, and returns to the docking station based on the return path.

The docking station starts a timer for preset duration each time the first signal is received, and the preset duration is greater than a single period length of the first preset period based on which the autonomous operation device transmits the first signal. If the first signal is received within the timing process, the docking station controls the switch unit connected to the power terminals to stay in the off state, and restarts the timer for the preset duration when receiving the first signal; or if the timer reaches the preset duration, and the first signal is still not received, the docking station controls the switch unit connected to the power terminals to switch to the on state. In this way, the power terminals of the docking station can be energized.

In an example, preset duration t₀ is greater than a period length T₁ of the first preset period; that is, t₀> T₁. Further, the preset duration t₀ is greater than twice the period length T₁ of the first preset period; that is, t₀> 2T₁.

In step 103, a battery in the autonomous operation device is charged after the autonomous operation device in the second state is docked with the power terminals of the docking station.

Specifically, after the autonomous operation device returns to the docking station, two charging terminals of the autonomous operation device are electrically connected to the two power terminals of the docking station, respectively; that is, the autonomous operation device completes the docking with the power terminals of the docking station. In this case, the power terminals of the docking station are energized, and a second control unit in the autonomous operation device controls to charge a battery pack.

In this embodiment, the autonomous operation device, when working, periodically transmits the first signal to the docking station to be paired with the autonomous operation device; and the autonomous operation device, when returning, stops transmitting the first signal to the docking station. In this way, if the first signal is received, the docking station determines that the autonomous operation device is working, and controls the power terminals of the docking station for charging the autonomous operation device to be de-energized; or if the first signal is not received within the preset duration, the docking station determines that the autonomous operation device is about to return for charging, and controls the power terminals to be energized. Subsequently, after the autonomous operation device in the second state is paired with the power terminals of the docking station, the battery in the autonomous operation device can be charged. It can be learned from the foregoing description that, when the autonomous operation device is in the first state, the power terminals of the docking station are de-energized. In this case, even if the power terminals are short-circuited or one accidentally touches the power terminals, there is no risk of short circuits or electric shocks, thereby improving safety. In addition, this reduces the duration for which the power terminals stay energized, thereby delaying corrosion caused by the power terminals being energized, extending the service life of the power terminals, and reducing waste of electric energy.

A second embodiment of the present disclosure relates to a control method. Compared with the first embodiment, the main improvement of this embodiment lies in that the autonomous operation device, when returning, further determines whether to stop transmitting the first signal to the docking station based on a position of the autonomous operation device relative to the docking station.

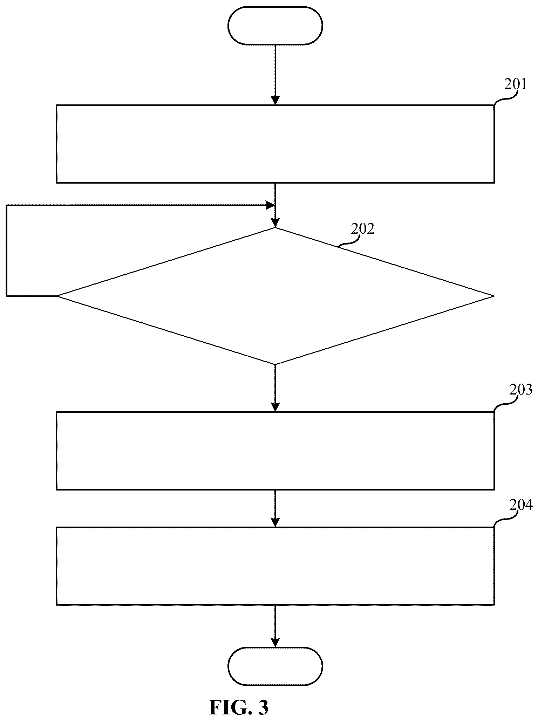

A specific process of the control method according to this embodiment is shown in FIG. 3.

In step 201, a first signal is transmitted to a docking station based on a first preset period when an autonomous operation device is in a first state, to enable the docking station to control, if the first signal is received, power terminals of the docking station for charging the autonomous operation device to be de-energized. This is substantially the same as step 101 in the first embodiment, and will not be repeated here.

In step 202, when the autonomous operation device enters a second state, it is detected whether the autonomous operation device has entered a preset range, where the preset range is usually near the docking station. If it is detected that the autonomous operation device has entered the preset range, step 203 is performed; or if it is not detected that the autonomous operation device has entered the preset range, step 202 is performed again.

Specifically, in an example in which the second state is a return state, when the autonomous operation device has finished an operation task, is low on power, or has reached set working time, whether the autonomous operation device has entered the preset range is detected in real time during a switchover to the return state and movement toward the docking station. When the autonomous operation device has not moved into the preset range, it indicates that the autonomous operation device will not enter the docking station for docking and charging within a short period of time, the first signal is kept being transmitted to the docking station based on the first preset period, and whether the autonomous operation device has entered the preset range is continuously detected until it is detected that the autonomous operation device has entered the preset range. Then, step 203 is performed to stop transmitting the first signal to the docking station.

In an example, traveling duration of the autonomous operation device for traveling along a return path from a point on a boundary of the preset range to the docking station is less than or equal to preset duration. Specifically, the boundary of the preset range is a point or a point set on the return path of the autonomous operation device, a distance between the point on the boundary of the preset range and the docking station is a fixed value L, and a moving speed of the autonomous operation device during the return is a set value V. In this way, it can be calculated that the traveling duration of the autonomous operation device for traveling from the point on the boundary of the preset range to the docking station t₁ = L/V. The pre-configured traveling duration t₁ is less than preset duration t₀ for timing performed by the docking station. Therefore, when the autonomous operation device moves to the docking station, a timer of the docking station still does not reach the preset duration t₀, and in this case, the power terminals of the docking station are still de-energized, thereby allowing the charging terminals of the autonomous operation device to be docked with the de-energized power terminals of the docking station, which prevents arc generation during docking between the two and improves docking safety. Subsequently, the timer of the docking station reaches the preset duration t₀, and the power terminals are controlled to be energized.

In this embodiment, there are two manners of detecting whether the autonomous operation device has entered the preset range.

In a manner 1, a distance between the autonomous operation device and the docking station is determined based on position information acquired by a positioning device in the autonomous operation device; and it is determined that the autonomous operation device has entered the preset range if the distance between the autonomous operation device and the docking station is less than or equal to a preset distance threshold; or it is determined that the autonomous operation device has not entered the preset range if the distance between the autonomous operation device and the docking station is greater than a preset distance threshold.

Specifically, the autonomous operation device is provided with the positioning device (for example, a global navigation satellite positioning device or a vision-based positioning device). During movement, the autonomous operation device acquires the position information of the autonomous operation device in real time by using the positioning device, and determines the distance between the autonomous operation device and the docking station based on the position information. For example, the position information acquired by the autonomous operation device is a set of position coordinates. With the coordinates of the docking station preset in the autonomous operation device, a calculated distance between the position coordinates of the autonomous operation device and the coordinates of the docking station is the distance between the autonomous operation device and the docking station.

It is determined that the autonomous operation device has entered the preset range if the calculated distance between the autonomous operation device and the docking station is less than or equal to the preset distance threshold, and the first signal is stopped being transmitted to the docking station; or it is determined that the autonomous operation device is located beyond the preset range if the calculated distance between the autonomous operation device and the docking station is greater than the preset distance threshold, and the autonomous operation device continues to move toward the docking station based on the return path.

In a manner 2, whether the autonomous operation device has received a guide signal transmitted by a guide apparatus in the docking station is determined; and it is determined that the autonomous operation device has entered the preset range if the autonomous operation device has received the guide signal transmitted by the guide apparatus in the docking station; or it is determined that the autonomous operation device has not entered the preset range if the autonomous operation device has not received the guide signal transmitted by the guide apparatus in the docking station. Specifically, the docking station is provided with the guide apparatus, the guide apparatus can transmit the guide signal, and an effective range of the guide signal is the preset range described above. During movement toward the docking station based on the return path, the autonomous operation device detects in real time whether the guide signal transmitted by the guide apparatus is received, and determines that the autonomous operation device is located beyond the preset range if the guide signal is not received, and the autonomous operation device continues to move toward the docking station based on the return path; or if the guide signal can be received, it is determined that the autonomous operation device has entered the preset range, and the autonomous operation device stops transmitting the first signal to the docking station. In some embodiments, the effective range of the guide signal refers to a range within which the autonomous operation device can receive the guide signal. In some other embodiments, the effective range of the guide signal refers to a range within which the autonomous operation device can receive the guide signal of a specific strength.

In step 203, the transmission of the first signal to the docking station is stopped, to enable the docking station to control, if the first signal is not received within preset duration, the power terminals to be energized, where the preset duration is greater than a period length of the first preset period. This is substantially the same as step 102 in the first embodiment, and will not be repeated here.

In step 204, a battery in the autonomous operation device is charged after the autonomous operation device in the second state is docked with the power terminals of the docking station. This is substantially the same as step 103 in the first embodiment, and will not be repeated here.

A third embodiment of the present disclosure relates to a control method. Compared with the first embodiment, the main improvement of this embodiment lies in that the autonomous operation device further has an anti-theft function.

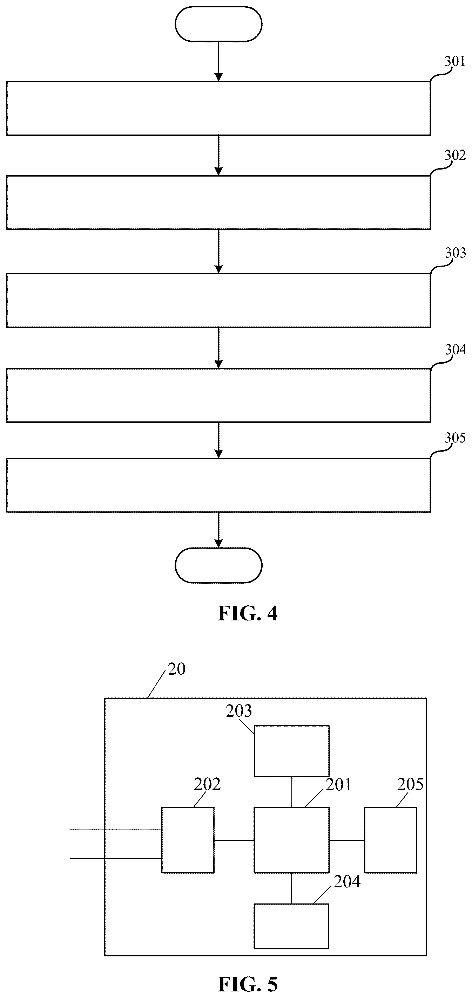

A specific process of the control method according to this embodiment is shown in FIG. 4.

In step 301, a first signal is transmitted to a docking station based on a first preset period when an autonomous operation device is in a first state, to enable the docking station to control, if the first signal is received, power terminals of the docking station for charging the autonomous operation device to be de-energized.

This is substantially the same as step 101 in the first embodiment, and will not be repeated here.

In step 302, a second signal is transmitted to the docking station based on a second preset period when the autonomous operation device is in the first state, to enable the docking station to determine, if the docking station has not received the second signal, that the distance between the autonomous operation device and the docking station is greater than a set safe distance. In some embodiments, the second preset period may be a constant value. In some embodiments, a second time interval between two adjacent second signals is a value that changes within a specific numerical value range, and the second preset period is defined as a maximum value of the second time interval. In some embodiments, the second time interval changes in a regular manner. In some embodiments, the second time interval changes randomly or pseudo-randomly.

Referring to FIG. 5, the autonomous operation device 20 is further provided with a third communication module 204 communicatively connected to the second control unit 201. The third communication module 204 is communicatively connected to the first communication module 103 in the docking station 10, and a signal transmit power of the third communication module 204 is greater than a signal transmit power of the second communication module 203. In this way, a distance within which the docking station 10 can receive the second signal is also greater than a distance within which the first signal can be received, and a maximum distance within which the docking station 10 can receive the second signal is the set safe distance of the autonomous operation device.

The autonomous operation device 20 transmits the second signal to the docking station 10 by using the third communication module 204 based on the second preset period during working. If the second signal can be received, the docking station 10 determines that the autonomous operation device 20 is within the set safe distance; that is, the autonomous operation device 20 is not stolen; or if the second signal cannot be received, the docking station 10 determines that the distance between the autonomous operation device 20 and the docking station 10 is greater than the set safe distance. In this case, the docking station 10 controls the power terminals to stay de-energized.

In step 303, when the autonomous operation device is in the first state, the transmission of the second signal to the docking station is stopped if an anti-theft module detects that the autonomous operation device leaves the preset working region.

Referring to FIG. 5, the autonomous operation device 20 is further provided with an anti-theft module 205 communicatively connected to the second control unit 201. The anti-theft module 205 is configured to determine whether the autonomous operation device 20 is located within the preset working region. When determining that the autonomous operation device 20 is located within the preset working region, the autonomous operation device 20 determines that the autonomous operation device 20 is not stolen, and continues to transmit the second signal to the docking station 10 by using the third communication module 204 based on the second preset period. When the second signal can be received, the docking station 10 determines that the autonomous operation device 20 is within the set safe distance; that is, the autonomous operation device 20 is not stolen.

When determining that the autonomous operation device 20 is located beyond the preset working region, the autonomous operation device 20 determines that the autonomous operation device 20 is stolen, and stops transmitting the second signal to the docking station 10. When the second signal cannot be received, the docking station 10 determines that the distance between the autonomous operation device 20 and the docking station 10 is greater than the set safe distance. In this case, the docking station 10 controls the power terminals to stay de-energized.

The anti-theft module 205 may have a positioning function to acquire the position information of the autonomous operation device 20, or may acquire the position information of the autonomous operation device 20 from an existing positioning device of the autonomous operation device 20. In this way, the anti-theft module 205 can monitor that the autonomous operation device 20 leaves the preset working region based on the current position information of the autonomous operation device 20.

Further, in step 302 and step 303 described above, when the second signal cannot be received, the docking station 10 transmits an alarm signal to notify a user that the autonomous operation device leaves the preset working region, to prompt the user to check whether the autonomous operation device 20 is stolen or whether a fault occurs.

The autonomous operation device may transmit the alarm signal in any one of the following manners: using a built-in audible alarm (for example, a buzzer) or a light-emitting alarm (for example, an LED light) in the autonomous operation device. In some examples, the autonomous operation device is provided with a built-in wireless communication module including WiFi and/or cellular networks. The autonomous operation device is connected to a user terminal through the wireless communication module, and the autonomous operation device directly transmits the alarm signal to the user terminal. The user terminal is, for example, a mobile phone, a tablet computer, a desktop host, etc.

In step 304, the transmission of the first signal to the docking station is stopped when the autonomous operation device enters a second state, to enable the docking station to control, if the first signal is not received within preset duration, the power terminals to be energized, where the preset duration is greater than a period length of the first preset period. This is substantially the same as step 102 in the first embodiment, and will not be repeated here.

In step 305, a battery in the autonomous operation device is charged after the autonomous operation device in the second state is docked with the power terminals of the docking station. This is substantially the same as step 103 in the first embodiment, and will not be repeated here.

A fourth embodiment of the present disclosure relates to a control method applied to a docking station. The docking station is configured to charge an autonomous operation device to be paired with the docking station, and the autonomous operation device is communicatively connected to the docking station via wireless communication. The autonomous operation device refers to a robot that can autonomously move within a preset working region enclosed by boundaries and perform a specific operation, typically an intelligent sweeper/vacuum cleaner performing a cleaning operation, or an intelligent lawn mower performing a lawn mowing operation. For specific structures of the docking station and the autonomous operation device, reference can be made to FIG. 1 and related descriptions in the first embodiment. Details are not described herein again.

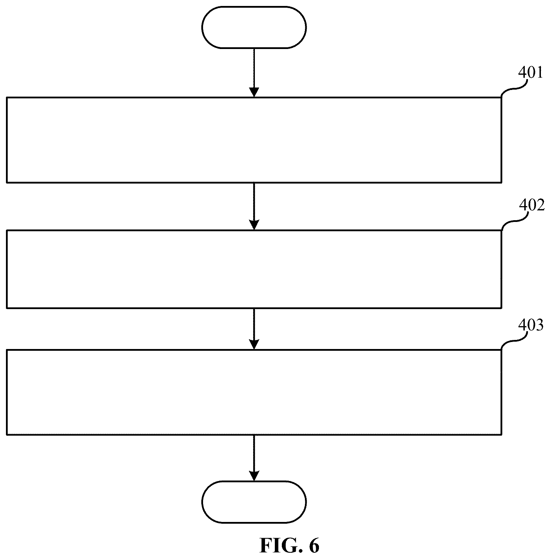

A specific process of the control method according to this embodiment is shown in FIG. 6.

In step 401, power terminals of a docking station for charging an autonomous operation device are controlled to be de-energized in response to a first signal transmitted by the autonomous operation device based on a first preset period when the autonomous operation device is in a first state.

In step 402, the power terminals are controlled to be energized if the first signal is not received within preset duration, where the preset duration is greater than a period length of the first preset period.

In step 403, a battery in the autonomous operation device is charged after the docking station is docked with the power terminals of the autonomous operation device.

Since the first embodiment corresponds to this embodiment, this embodiment may be implemented in conjunction with the first embodiment. The relevant technical details described in the first embodiment remain valid for this embodiment, and the technical effects achieved in the first embodiment are equally achievable in this embodiment. For the sake of brevity, redundant descriptions are omitted here. Accordingly, the relevant technical details described in this embodiment are also applicable to the first embodiment.

A fifth embodiment of the present disclosure relates to a control method. Compared with the fourth embodiment, the main improvement of this embodiment lies in that the docking station can detect whether the autonomous operation device is stolen.

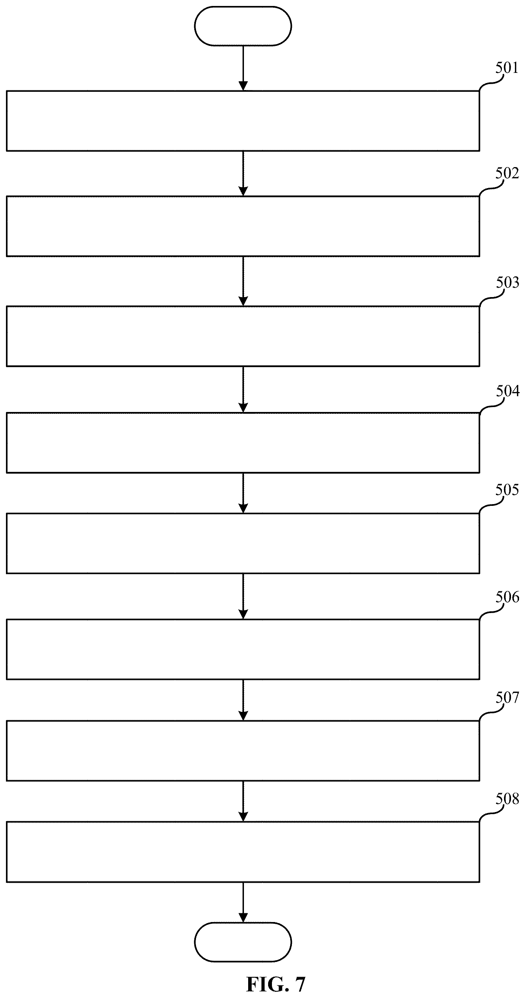

A specific process of the control method according to this embodiment is shown in FIG. 7.

In step 501, power terminals of a docking station for charging an autonomous operation device are controlled to be de-energized in response to a first signal transmitted by the autonomous operation device based on a first preset period when the autonomous operation device is in a first state.

In step 502, if a second signal transmitted by the autonomous operation device based on a second preset period when the autonomous operation device is in the first state is not received, it is determined that a distance between the autonomous operation device and the docking station is greater than a set safe distance.

In step 503, if a second signal transmitted by the autonomous operation device based on a second preset period when the autonomous operation device is in the first state is not received, the power terminals are kept de-energized.

In step 504, if a second signal transmitted by the autonomous operation device based on a second preset period when the autonomous operation device is in the first state is not received, an alarm signal is transmitted to notify a user that the autonomous operation device leaves a preset working region.

In step 505, the power terminals are controlled to stay energized when the docking station and the autonomous operation device are in a docked state.

Specifically, when the docking station and the autonomous operation device are in the docked state, the power terminals are controlled to stay energized, to charge the autonomous operation device. The autonomous operation device stops transmitting the first signal and the second signal described above, and the docking station does not stop supplying power for not receiving the first signal and the second signal.

In addition, when the docked state between the docking station and the autonomous operation device switches to a non-docked state; that is, when the autonomous operation device leaves the docking station, the docking station subsequently adjusts an energization status of the power terminals based on whether the first signal and/or the second signal is received.

In step 506, the power terminals are controlled to be energized in response to a received trigger signal for controlling the power terminals to be energized.

Specifically, in a case in which a battery pack of the autonomous operation device runs out, the autonomous operation device cannot transmit the first signal and the second signal, and the second signal is not received by the docking station, the power terminals are kept de-energized. In this case, when receiving the trigger signal for controlling the power terminals to be energized, the docking station may control the power terminals to be energized, to charge the autonomous operation device when the autonomous operation device is docked with the docking station subsequently. The trigger signal may be generated by a user triggering a mechanical power-on switch or a touch power-on switch on the docking station, or may be transmitted by a user using an application program for controlling the docking station.

In step 507, the power terminals are controlled to be energized if the first signal is not received within preset duration, where the preset duration is greater than a period length of the first preset period.

In step 508, a battery in the autonomous operation device is charged after the docking station is docked with the power terminals of the autonomous operation device.

Since the second and third embodiments correspond to this embodiment, this embodiment may be implemented in conjunction with the second and third embodiments. The relevant technical details described in the second and third embodiments remain valid for this embodiment, and the technical effects achieved in the second and third embodiments are equally achievable in this embodiment. For the sake of brevity, redundant descriptions are omitted here. Accordingly, the relevant technical details described in this embodiment are also applicable to the second and third embodiments.

A sixth embodiment of the present disclosure relates to a non-transitory computer-readable storage medium having stored thereon processor-executable instructions, where the executable instructions are configured to enable a processor of an autonomous operation device to perform the control method according to any one of the first to third embodiments.

A seventh embodiment of the present disclosure relates to an autonomous operation device, configured to perform the control method according to any one of the first to third embodiments, or including the non-transitory computer-readable storage medium according to the sixth embodiment. The autonomous operation device refers to a robot that can autonomously move within a preset working region enclosed by boundaries and perform a specific operation, typically an intelligent sweeper/vacuum cleaner performing a cleaning operation, or an intelligent lawn mower performing a lawn mowing operation.

An eighth embodiment of the present disclosure relates to a non-transitory computer-readable storage medium having stored thereon processor-executable instructions, where the executable instructions are configured to enable a processor of an autonomous operation device to perform the control method according to the fourth or fifth embodiment.

A ninth embodiment of the present disclosure relates to a docking station, configured to perform the control method according to the fourth or fifth embodiment, or including the non-transitory computer-readable storage medium according to the eighth embodiment. The docking station is configured to charge an autonomous operation device to be paired with the docking station.

A tenth embodiment of the present disclosure relates to an autonomous operation system, which includes: the autonomous operation device according to the seventh embodiment and the docking station according to the ninth embodiment. The docking station is communicatively connected to the autonomous operation device. The preferred embodiments of the present disclosure have been described in detail above. However, it should be understood that an aspect of the embodiments can be modified, if necessary, to employ aspects, features, and concepts of various patents, applications, and publications to provide another embodiment.

These and other modifications can be made to the embodiments based on the detailed description described above. Generally, in the claims, the terms used should not be construed to be limited to the specific embodiments disclosed in this specification and the claims, but should be construed to include all possible embodiments along with the full scope of equivalents to which such claims are entitled.

## Claims

1. A control method, applied to an autonomous operation device, the method comprising:
transmitting a first signal to a docking station based on a first preset period when the autonomous operation device is in a first state, to enable the docking station to control, if the first signal is received, power terminals of the docking station for charging the autonomous operation device to be de-energized;
stopping transmitting the first signal to the docking station when the autonomous operation device is in a second state, to enable the docking station to control, if the first signal is not received within preset duration, the power terminals to be energized, wherein the preset duration is greater than a period length of the first preset period; and
charging a battery in the autonomous operation device after the autonomous operation device in the second state is docked with the power terminals of the docking station.

2. The control method according to claim 1, wherein before stopping transmitting the first signal to the docking station when the autonomous operation device is in the second state, the method further comprises:
detecting whether the autonomous operation device has entered a preset range; and
performing the step of stopping transmitting the first signal to the docking station if it is detected that the autonomous operation device has entered the preset range; or
returning to the step of detecting whether the autonomous operation device has entered the preset range if it is not detected that the autonomous operation device has entered the preset range.

3. The control method according to claim 2, wherein detecting whether the autonomous operation device has entered the preset range comprises:
determining a distance between the autonomous operation device and the docking station based on position information acquired by a positioning device in the autonomous operation device; and
determining that the autonomous operation device has entered the preset range if the distance between the autonomous operation device and the docking station is less than or equal to a preset distance threshold; or
determining that the autonomous operation device has not entered the preset range if the distance between the autonomous operation device and the docking station is greater than a preset distance threshold.

4. The control method according to claim 2, wherein detecting whether the autonomous operation device has entered the preset range comprises:
determining whether the autonomous operation device has received a guide signal transmitted by a guide apparatus in the docking station; and
determining that the autonomous operation device has entered the preset range if the autonomous operation device has received the guide signal transmitted by the guide apparatus in the docking station; or
determining that the autonomous operation device has not entered the preset range if the autonomous operation device has not received the guide signal transmitted by the guide apparatus in the docking station.

5. The control method according to claim 1, wherein the transmission of the first signal to the docking station is stopped when the autonomous operation device switches to the second state.

6. The control method according to claim 1, further comprising:
transmitting a second signal to the docking station based on a second preset period when the autonomous operation device is in the first state, to enable the docking station to determine, if the docking station has not received the second signal, that a distance between the autonomous operation device and the docking station is greater than a set safe distance.

7. The control method according to claim 6, wherein the autonomous operation device further comprises an anti-theft module, and the method further comprises:
when the autonomous operation device is in the first state, stopping transmitting the second signal to the docking station if the anti-theft module detects that the autonomous operation device leaves a preset working region.

8. A control method, applied to a docking station, the method comprising:
controlling power terminals of the docking station for charging an autonomous operation device to be de-energized in response to a first signal transmitted by the autonomous operation device based on a first preset period when the autonomous operation device is in a first state;
controlling the power terminals to be energized if the first signal is not received within preset duration, wherein the preset duration is greater than a period length of the first preset period; and
charging a battery in the autonomous operation device after the docking station is docked with the power terminals of the autonomous operation device.

9. The control method according to claim 8, further comprising:
if a second signal transmitted by the autonomous operation device based on a second preset period when the autonomous operation device is in the first state is not received, determining that a distance between the autonomous operation device and the docking station is greater than a set safe distance.

10. The control method according to claim 8, further comprising:
if a second signal transmitted by the autonomous operation device based on a second preset period when the autonomous operation device is in the first state is not received, keeping the power terminals de-energized.

11. The control method according to claim 8, further comprising:
if a second signal transmitted by the autonomous operation device based on a second preset period when the autonomous operation device is in the first state is not received, transmitting an alarm signal to notify a user that the autonomous operation device leaves a preset working region.

12. The control method according to claim 8, wherein the power terminals are controlled to stay energized when the docking station and the autonomous operation device are in a docked state.

13. The control method according to claim 8, further comprising:
controlling the power terminals to be energized in response to a received trigger signal for controlling the power terminals to be energized.

14. A non-transitory computer-readable storage medium having stored thereon processor-executable instructions, wherein the executable instructions are configured to enable a processor of an autonomous operation device to perform the control method according to any one of claims 1 to 7.

15. An autonomous operation device, configured to perform the control method for the autonomous operation device according to any one of claims 1 to 7, or comprising the non-transitory computer-readable storage medium according to claim 14.

16. A non-transitory computer-readable storage medium having stored thereon processor-executable instructions, wherein the executable instructions are configured to enable a processor of an autonomous operation device to perform the control method according to any one of claims 8 to 13.

17. A docking station, configured to perform the control method for the autonomous operation device according to any one of claims 8 to 13, or comprising the non-transitory computer-readable storage medium according to claim 16.

18. An autonomous operation system, comprising the autonomous operation device according to claim 15 and the docking station according to claim 17, wherein the docking station is communicatively connected to the autonomous operation device.
